# FASCICULE DE BREVET EUROPEEN

(11) **EP 0 945 230 B1**
(45) Date de publication et mention de la délivrance du brevet: **19.09.2001**
(21) Numéro de dépôt: 99390004.2
(22) Date de dépôt: 25.03.1999
(51) Int. Cl.: B26D 1/00, A21C 1/14, A21B 3/13

(54) **Dispositif permettant d'obtenir des feuilles de pain de grandes dimensions à partir d'un bloc de pain et son utilisation.**
Vorrichtung zum Schneiden von grossen Brotscheiben aus einem grossen Laib, sowie Verwendung der Vorrichtung.
Apparatus for cutting large slices from a large loaf of bread, as well as use of the apparatus.

(30) Priorité: 25.03.1998 FR 9803796
(43) Date de publication de la demande: 29.09.1999
(73) Titulaire: France Cocktail S.A., 47310 Estillac (FR)
(72) Inventeur: Denghi, Philippe, 47310 Estillac (FR)
(74) Mandataire: Ravina, Bernard

(56) Documents cités:
- FR-A- 2 649 861
- US-A- 5 095 790

## Description

La présente invention concerne un dispositif permettant d'obtenir des feuilles de pain de grandes dimensions à partir d'un bloc de pain. Les blocs de pain sont de forme parallélépipédique (0.4 par 0.6 par 0.15m par exemple) et peuvent être du pain de mie, du pain de seigle ou tout autre type de pain. Le procédé de fabrication de ces blocs de pain et le moule à cet effet sont décrits dans un brevet déposé par le même inventeur (EP-A-0945067, qui est état de la technique selon l'article 54(3) CBE).

Ces feuilles de pain peuvent êtres utilisées pour la confection de canapés pour l'apéritif. Leur grande dimension est intéressante dans la mesure ou elle permet de limiter les pertes en croûtes de cuisson et autorise une fabrication industrielle plus productive.

Les feuilles peuvent être garnies d'aliments pour être ensuite découpées, par exemple au moyen d'une machine de découpe au jet d'eau, sous forme de petites portions afin de former des canapés pour l'apéritif.

Les dispositifs de découpe des blocs de pain en tranches ou en feuille du type connu ont l'inconvénient de nécessiter un système de serrage du pain pour le maintenir durant la découpe. Il s'agit généralement de deux plaques prenant le pain en étau. Ce système a tendance à endommager le pain de part les efforts nécessaires au serrage. De plus, il faut une prise suffisante pour maintenir le pain, le système de serrage ne permet donc pas de découper entièrement le pain ce qui génère des pertes.

Le brevet FR 2 649 861 (DESPLANQUES DOMINIQUE) décrit un moule pour confectionner des caisses de pain. Ce moule est constitué d'une âme métallique fermée et de deux couvercles fermant le caisson. Les deux couvercles sont maintenus par des attaches. Deux grilles rigides se positionnent en partie haute et en partie basse dans le caisson. Un plateau suiveur régule le développement de la pâte à la fermentation. Des soupapes 9 régulent la pression des gaz dans le caisson lors de la cuisson.

Ce brevet se limite à la description d'un moule, d'autre part, il ne semble pas que la grille décrite dans ce brevet soit destinée à servir de support au pain en vue de lui faire subir des opérations de découpage.

La présente invention vise à remédier à ces inconvénients et donc à éviter d'endommager le pain lors de son maintien pendant la découpe et à optimiser la découpe au maximum. L'invention a pour particularité de ne nécessiter aucun dispositif de serrage agissant directement sur le pain pour le maintenir lors de la découpe. L'invention est définie par la revendication 1. Ce dispositif met en oeuvre des blocs de pain incrustés sur une plaque trouée, un outil de découpe et une table. L'invention vise également l'utilisation du dispositif.

D'autres avantages et caractéristiques apparaîtront à la lecture de la description ci-après de formes de réalisation de l'invention données à titre d'exemple non limitatifs et illustrés par les dessins joints dans lesquels:

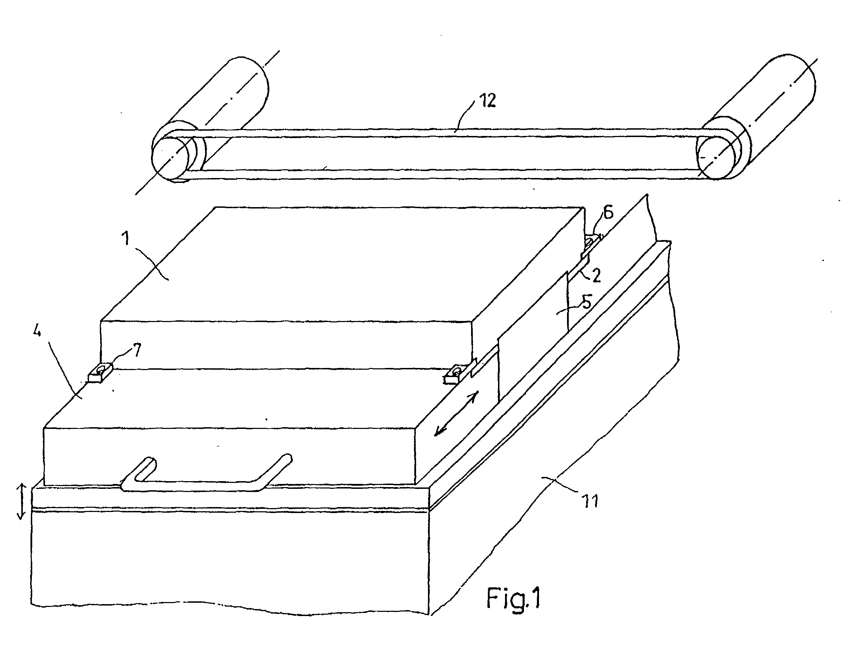

- la figure 1 représente une vue en perspective de l'outil de découpe et de la table mobile.

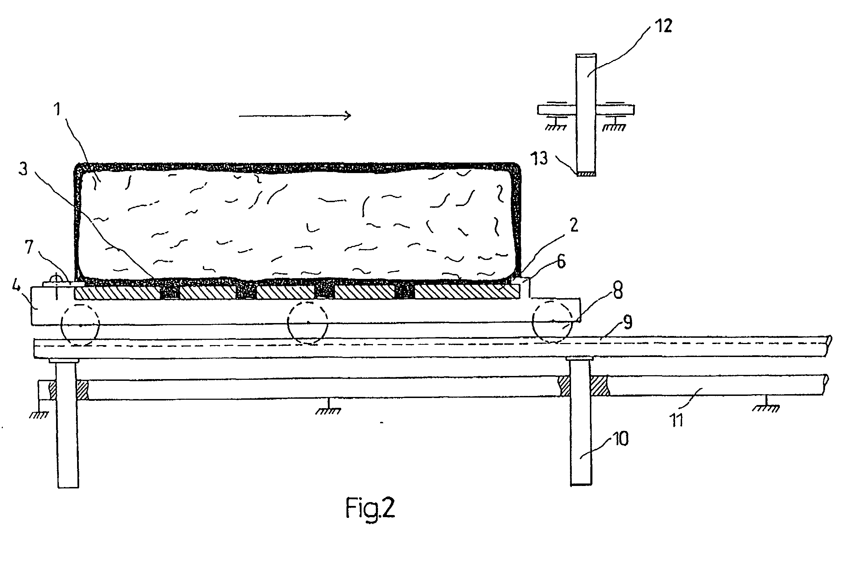

- la figure 2 représente une vue de coté schématisée de l'outil de découpe et du pain incrusté sur une plaque maintenue à la table mobile.

Le bloc de pain (1) est incrusté sur une plaque trouée (2) horizontale selon un procédé d'élaboration particulier qui consiste à faire cuire le pain sur ladite plaque dans un moule de manière à ce que, lors de la levée durant la cuisson, la pâte bloquée entre les parois du moule tende à se dilater et vienne naturellement s'incruster dans les trous de la grille. Ce procédé de fabrication de bloc de pain de forme parallélépipédique est décrit dans un brevet déposé par le même inventeur.

La croûte du pain (3) ainsi incrustée dans les trous de la plaque rend l'ensemble solidaire. Lors de la découpe, seule la plaque est maintenue, préservant ainsi le pain des efforts de serrage et permettant de couper la totalité du pain sans pertes.

L'ensemble pain-plaque est déposé sur une table mobile horizontale (4), la plaque (2) est bloquée latéralement par des rebords latéraux parallèles (5) fixés à la table. La hauteur de ces rebords n'excède presque pas l'épaisseur de la plaque ce qui permet d'optimiser la découpe au maximum. La plaque est maintenue dans l'axe de découpe par deux becquets (6) et deux loquets articulés ou vissés (7) qui s'intercalent entre le bloc de pain et la plaque. Cet ensemble permet de maintenir la plaque à la table, horizontalement et verticalement.

La table (4) est mobile horizontalement dans une direction perpendiculaire à l'axe de découpe sur une course correspondant à la longueur du bloc de pain. La table (4) est également mobile verticalement sur une course correspondant à la longueur du bloc de pain. La table (4) peut par exemple être guidée horizontalement par des roulements (8) dans des rainures (9) et verticalement par des colonnes (10) guidées dans le bâti (11) et actionnée par des vérins ou des crémaillères.

Le bloc de pain est découpé en feuilles (d'épaisseur variable et réglable suivant le type de pain) selon un plan horizontal.

L'élément tranchant peut être une scie à ruban (12) avec un ou deux cotés tranchants (13), ou tout autre outil adapté à la découpe du pain.

Dans le cadre de la présente invention et dans la description qui suit, l'élément tranchant est fixe par rapport au bâti et le bloc de pain est disposé sur une table mobile. On pourrait parfaitement imaginer que le bloc de pain soit fixe et l'élément tranchant mobile sans que cela ne sorte du cadre de la présente invention.

Les différentes phases de découpe possibles sont les suivantes:
Si l'élément de découpe possède deux cotés tranchants:
   - La table est animée d'un mouvement de translation horizontal jusqu'à ce que la première feuille soit découpée (cette première feuille correspond en général à la croûte de cuisson).
   - La table est animée d'un mouvement de translation vertical correspondant à l'épaisseur d'une feuille.
   - La table revient à sa position de départ et découpe ainsi la deuxième feuille.
   - La table est à nouveau élevée de la hauteur correspondant à une épaisseur de feuille et le cycle peut recommencer.
Si l'élément de découpe possède un seul côté tranchant la découpe ne s'effectue que dans un seul sens et la table doit revenir en position basse entre chaque découpe pour se dégager de la lame.
Les feuilles de pain peuvent être enlevées une par une après chaque découpe ou elles peuvent être enlevées toutes ensemble après la découpe du bloc de pain entier.
Une fois la dernière feuille utilisable découpée, il ne reste en général sur la grille que l'épaisseur de la croûte de cuisson, il n'y a donc eu aucune perte.
Les feuilles obtenues sont de grandes dimensions, par exemple 0,4 sur 0,6m, puisque la découpe selon l'invention est effectuée selon un plan horizontal. Les feuilles peuvent ensuite être dirigées vers une unité de garnissage puis découpées en petites portions ou être stockées ou vendues sans garniture pour d'autres utilisations.

## Revendications

1. Dispositif comprenant des moyens pour la fixation et la découpe du pain, permettant d'obtenir des feuilles de pain de grandes dimensions à partir d'un bloc de pain **caractérisé en ce qu'**il comprend :
- une plaque trouée (2) pour la fixation par incrustation du bloc de pain ;
- une table horizontale (4) à laquelle la plaque trouée (2) est maintenue ; un outil tranchant (10) pour le découpage du bloc de pain en feuilles selon un plan horizontal.

2. Dispositif selon la revendication 1 **caractérisé en ce que** le bloc de pain incrusté sur une plaque trouée est élaboré selon un procédé particulier qui consiste à faire cuire le pain sur ladite plaque dans un moule de manière à ce que, lors de la levée durant la cuisson, la pâte bloquée entre les parois du moule tende à se dilater et vienne naturellement s'incruster dans les trous de la grille.

3. Dispositif selon la revendication 1 **caractérisé en ce que** la plaque est maintenue latéralement à la table horizontale par des rebords (5), et longitudinalement et verticalement par des becquets (6) et des loquets articulés ou vissés (7).

4. Dispositif selon la revendication 1 **caractérisé en ce que** l'outil tranchant est une scie à ruban (12).

5. Dispositif selon la revendication 1 **caractérisé en ce que** la table mobile (4) se déplace horizontalement et verticalement sous l'outil tranchant (12) fixe par rapport au bâti.

6. Dispositif selon la revendication 1 **caractérisé en ce que** l'outil tranchant (12) se déplace horizontalement et verticalement par rapport à la table (4) fixée au bâti.

7. Utilisation du dispositif d'une des revendications 1 à 6 pour l'obtention de feuilles de pain par découpage.

## Patentansprüche

1. Vorrichtung mit Mitteln für die Befestigung und das Aufschneiden von Brot, mit der dünne Brotscheiben von großem Format ausgehend von einem Brotblock hergestellt werden können, **gekennzeichnet durch**:
- Eine gelochte Platte (2) für die Befestigung des Brotblocks durch Krustenbildung.
- Ein waagrechter Tisch (4), auf dém die gelochte Platte zum Aufschneiden des Brots in dünne Scheiben befestigt wird.
- Ein senkrecht dazu befindliches Schneidewerkzeug (10).

2. Vorrichtung nach Anspruch 1 **dadurch gekennzeichnet, dass** der auf der Platte eingebackene Brotblock nach einem spezifischen Verfahren hergestellt wird, das darin besteht, das Brot auf der genannten Platte in einer Form zu backen, so dass der zwischen den Wänden der Form eingeschlossene Teig, wenn er sich beim Backen hebt und auszudehnen sucht, die Löcher des Gitters mit einer Kruste überdeckt.

3. Vorrichtung nach Anspruch 1 **dadurch gekennzeichnet, dass** die Platte seitlich am horizontalen Tisch durch Randleisten (5), sowie der Länge nach und senkrecht durch Leisten (6) und frei bewegliche oder verschraubte Riegel (7) gehalten wird.

4. Vorrichtung nach Anspruch 1 **dadurch gekennzeichnet, dass** das Schneidewerkzeug eine Bandsäge (12) ist.

5. Vorrichtung nach Anspruch 1 **dadurch gekennzeichnet, dass** der mobile Tisch (4) sich horizontal und senkrecht unter dem Schneidewerkzeug (12) verschieben lässt, das in bezug auf das Gestell fest ist.

6. Vorrichtung nach Anspruch 1 **dadurch gekennzeichnet, dass** das Schneidewerkzeug (12) sich horizontal und senkrecht in bezug auf den am Gestell befestigten Tisch (4) verschieben lässt.

7. Verwendung der Vorrichtung nach einem der Ansprüche 1 bis 6 für das Erstellen von dünnen Brotscheiben durch Aufschneiden.

## Claims

1. Device including fittings to secure and cut bread into large sheets from a large block of bread **characterized by**:
- A plate with holes in it (2) to attach the block of bread by inlay;
- A horizontal table (4) to which the plate (2) is secured;
- A cutting tool to cut the block of bread along the horizontal plane.

2. Device according to claim 1 **characterized by** the fact that the block of bread inlaid on the plate with holes in it is made to a special process which involves baking the bread on the said plate in a mould so that, when the bread rises during baking, the dough blocked between the walls of the mould tends to dilate and naturally comes to inlay in the holes of the grid.

3. Device according to claim 1 **characterized by** the fact that the plate is held laterally to the horizontal table by the edges (5) and longitudinally and vertically by the spoilers (6) and the hinged or screwed catches (7).

4. Device according to claim I **characterized by** the fact that the cutting tool is a band saw (12).

5. Device according to claim 1 **characterized by** the fact that the mobile table (4) moves horizontally and vertically under the cutting tool (12) that is secured in relation to the main frame.

6. Device according to claim 1 **characterized by** the fact that the cutting tool (12) moves horizontally and vertically in relation to the table (4) secured to the fixed frame.

7. Use of the arrangements of one of the claims 1 to 6 to obtain sheets of bread by slicing.
